# EUROPEAN PATENT SPECIFICATION

(11) **EP 2 663 021 B1**
(45) Date of publication and mention of the grant of the patent: **25.03.2015**
(21) Application number: 11856645.4
(22) Date of filing: 28.12.2011
(51) Int. Cl.: H04L 12/18, H04L 12/911

(54) **CONNECTION ADMISSION CONTROL METHOD AND DEVICE AND PASSIVE OPTICAL NETWORK SYSTEM**
VERFAHREN UND VORRICHTUNG FÜR VERBINDUNGSFREIGABESTEUERUNG SOWIE PASSIVES OPTISCHES NETZWERKSYSTEM
PROCÉDÉ DE CONTRÔLE D'ADMISSION DE CONNEXION ET DISPOSITIF ET SYSTÈME DE RÉSEAU OPTIQUE PASSIF

(30) Priority: 26.01.2011 CN 201110028687
(43) Date of publication of application: 13.11.2013
(73) Proprietor: Huawei Technologies Co., Ltd., Longgang District Shenzhen, Guangdong 518129 (CN)
(72) Inventor: ZHENG, Weijiang, Shenzhen Guangdong 518129 (CN); LIU, Jianping, Shenzhen Guangdong 518129 (CN); HUANG, Bin, Shenzhen Guangdong 518129 (CN); WU, Mingxiao, Shenzhen Guangdong 518129 (CN)
(74) Representative: Thun, Clemens
(86) International application number: PCT/CN2011/084791
(87) International publication number: WO 2012/100620

(56) References cited:
- EP-A1- 1 993 229
- EP-A1- 2 224 639
- CN-A- 1 878 302
- CN-A- 101 183 977
- CN-A- 101 309 158
- CN-A- 101 436 948
- CN-A- 102 143 412
- US-A- 5 862 126
- CATHY ZHOU HUAWEI TECHNOLOGIES P R CHINA: "Updated text for draft new Recommendation Q.ANCP;463 (GEN/11)", ITU-T DRAFT ; STUDY PERIOD 2009-2012, INTERNATIONAL TELECOMMUNICATION UNION, GENEVA ; CH, vol. 5/11, 28 April 2010 (2010-04-28), pages 1-16, XP017437510, [retrieved on 2010-04-28]
- NABIL BITAR VERIZON SANJAY WADHWA JUNIPER NETWORKS: "Applicability of Access Node Control Mechanism to PON based Broadband Networks; draft-ietf-ancp-pon-00.txt", APPLICABILITY OF ACCESS NODE CONTROL MECHANISM TO PON BASED BROADBAND NETWORKS; DRAFT-IETF-ANCP-PON-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 18 October 2010 (2010-10-18), pages 1-32, XP015071808, [retrieved on 2010-10-18]
- OOGHE ALCATEL-LUCENT N VOIGT NOKIA SIEMENS NETWORKS M PLATNIC ECI TELECOM T HAAG DEUTSCHE TELEKOM S WADHWA JUNIPER NETWORKS S: "Framework and Requirements for an Access Node Control Mechanism in Broadband Multi-Service Networks; rfc5851.txt", FRAMEWORK AND REQUIREMENTS FOR AN ACCESS NODE CONTROL MECHANISM IN BROADBAND MULTI-SERVICE NETWORKS; RFC5851.TXT, INTERNET ENGINEERING TASK FORCE, IETF; STANDARD, INTERNET SOCIETY (ISOC) 4, RUE DES FALAISES CH- 1205 GENEVA, SWITZERLAND, 6 May 2010 (2010-05-06), pages 1-47, XP015070790, [retrieved on 2010-05-06]

## Description

### □FIELD OF THE INVENTION

The present invention relates to the field of communication technologies, and in particular, to a connection admission control method and apparatus, and a passive optical network system.

### □BACKGROUND OF THE INVENTION

IP television (IPTV, IP Television) is a service consuming a high bandwidth, and in order to ensure video service quality in a case of a limited network bandwidth, resource management (RM, Resource Management) and connection admission control (CAC, Connection Admission Control) functions need to be deployed in a network. An IPTV service includes two kinds of services, namely, a multicast/broadcast video (such as live video, and BTV, Broadcast Television), and a unicast video (such as video on demand, VOD, Video On Demand).

Multicast CAC is generally completed at an access node (AN, Access Node) locally, the AN judges whether a link bandwidth of a user meets a bandwidth requirement of a channel that the user requests to join, or judges whether the number of channels that a user joins exceeds a limited maximum number, and if the CAC fails (the bandwidth is insufficient or the maximum number is exceeded), a channel joining request of the user is refused.

Currently, with the evolution of a passive optical network (PON, Passive Optical Network) technology and the maturity of a 10G xPON technology, multicast admission control is further applied in an optical fiber access network. In an existing solution, on a user link, a local multicast CAC function is completed by an optical line terminal (OLT, Optical Line Terminal); on the OLT, CAC performs bandwidth management by taking a physical PON port as a unit, a highest rate is 1 Gbps, and a CAC bandwidth of the PON port may be initialized and configured locally.

When a multicast program is demanded by an optical network unit (ONU, Optical Network Unit), the OLT judges whether the program is demanded by another ONU in a PON where the ONU is located; if not, a bandwidth of the program is deducted from an available bandwidth of the PON port, and if a remaining available bandwidth of the PON port is not sufficient for deduction, the demanding fails. On the other hand, when the demanding of the ONU is offline, if the program is not demanded by another ONU, the bandwidth is released back to the available bandwidth of the PON port.

Besides, in the prior art, coordination between a unicast bandwidth and a multicast bandwidth may be allowed on the basis of division of a unicast video bandwidth and a multicast video bandwidth. The multicast bandwidth is managed by the OLT, the unicast bandwidth is managed by a resource and admission control sub-system (RACS, Resource and Admission Control Sub-System), and the multicast CAC function is completed by the OLT.

The CAC bandwidth of the PON port is delivered to the OLT by the RACS by using a network control protocol, such as an access node control protocol (ANCP, Access Node Control Protocol), and the OLT performs control according to the bandwidth delivered by the RACS. When the unicast bandwidth or the multicast bandwidth is insufficient, bandwidth negotiation may be performed between the OLT and the RACS; if a program is demanded by the user, and an available multicast bandwidth of the PON port is insufficient, the OLT tries to coordinate with the RACS to provide part of the unicast bandwidth for the multicast; if the coordinating succeeds, a multicast request of the user is accepted, and if the coordinating fails, an online request of the user is refused.

Patent application No. 1993229 A1 discloses a multicast connection admission control method by calculating a currently remaining multicast support capability of a network-side functional unit upon receiving a program request initiated from a user and admitting an access of the user when a support capability required for a program as requested by the user is below or equal to the currently remaining multicast support capability of the network-side functional unit.

However, a current CAC solution takes the physical PON port as the unit, which has a limitation.

### □ SUMMARY OF THE INVENTION

Embodiments of the present invention provide a connection admission control method and apparatus, and an optical line terminal, aiming at solving a problem of connection admission control of different bandwidth channels under a same physical port.

An embodiment of the present invention provides a connection admission control method, where the method includes:
receiving, by an optical line terminal, a multicast on-demand request sent by an optical network unit, where the multicast on-demand request includes an identifier of the optical network unit and information of a program on-demand;
determining a physical port and a sub-channel of a physical port where the ONU is located, according to the identifier of the optical network unit and a correspondence among an identifier of an ONU, a physical port and a sub-channel of a physical port;
wherein a physical port of the OLT at least comprises 1G and 10G sub-channels; wherein 1G bandwidths is assigned to the 1G sub-channel while 10G bandwidths is assigned to the 10G sub-channel, the correspondence among the identifier of the ONU, a physical port and a sub-channel is established by adding the ONU to the corresponding physical port according to the identifier of the ONU at the beginning of adding the ONU to the OLT; and
determining whether the program is demanded under the determined sub-channel of the determined physical port; and if a determination result is yes, allowing the optical network unit to access.

An embodiment of the present invention further provides a connection admission control apparatus, where the apparatus includes:
a request receiving unit, configured to receive a multicast on-demand request sent by an optical network unit, where the multicast on-demand request includes an identifier of the optical network unit and information of a program on-demand;
a determining unit, configured to determine, a physical port and a sub-channel where the optical network unit is located, according to the identifier of the optical network unit and a correspondence among an identifier of an ONU, a physical port and a sub-channel of a physical port;
   wherein a physical port of the OLT at least comprises 1G and 10G sub-channels;
   wherein 1G bandwidths is assigned to the 1G sub-channel while 10G bandwidths is assigned to the 10G sub-channel, the correspondence among the identifier of the ONU, a physical port and a sub-channel is established by adding the ONU to the corresponding physical port according to the identifier of the ONU at the beginning of adding the ONU to the OLT; and
   a program judging unit, configured to determine whether the program is demanded under the determined sub-channel of the determined physical port; and
   an access unit, configured to allow the optical network unit to access when a determination result of the program judging unit is yes.

An embodiment of the present invention further provides an optical line terminal, where the optical line terminal includes the foregoing connection admission control apparatus.

Beneficial effects of the embodiments of the present invention are that the connection admission control of different bandwidth channels under the same physical port may be performed by dividing the physical port and the sub-channel, which neither exceeds a bandwidth range, nor wastes resources.

### □BRIEF DESCRIPTION OF THE DRAWINGS

Accompanying drawings described here are used to provide further understanding of the present invention, and constitute part of the application, but are not intended to limit the present invention.

In the accompanying drawings:
FIG. 1 is a flow chart of a connection admission control method according to an embodiment of the present invention;
FIG. 2 is a flow chart of a connection admission control method adopting a virtual port according to an embodiment of the present invention;
FIG. 3 is a schematic diagram of an adopted virtual port according to an embodiment of the present invention;
FIG. 4 is a flow chart of a connection admission control method adopting a sub-channel according to an embodiment of the present invention;
FIG. 5 is an example diagram of identifying a bandwidth channel with an extended type length value according to an embodiment of the present invention;
FIG. 6 is a structural diagram of a connection admission control apparatus according to an embodiment of the present invention; and
FIG. 7 is another structural diagram of a connection admission control apparatus according to an embodiment of the present invention.

### □DETAILED DESCRIPTION OF THE EMBODIMENTS

To make the objectives, technical solutions and advantages of the present invention more comprehensible, the following further describes the embodiments of the present invention in detail with reference to the accompanying drawings. The exemplary embodiments of the present invention and the description are used to explain the present invention, and shall not be construed as a limitation on the present invention.

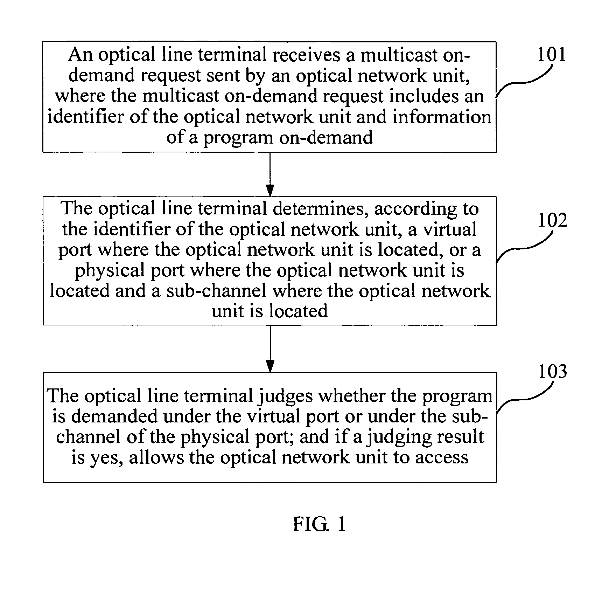

An embodiment of the present invention provides a connection admission control method, and as shown in FIG. 1, the method includes:
Step 101: An optical line terminal receives a multicast on-demand request sent by an optical network unit, where the multicast on-demand request includes an identifier of the optical network unit and information of a program on-demand.
Step 102: The optical line terminal determines, according to the identifier of the optical network unit, a virtual port where the optical network unit is located, or a physical port where the optical network unit is located and a sub-channel where the optical network unit is located.
Step 103: The optical line terminal judges whether the program is demanded under the virtual port where the optical network unit is located or under the sub-channel of the physical port where the optical network unit is located; and if a judging result is yes, allows the optical network unit to access.

In this embodiment, the optical network unit may be a 1G ONU or a 10G ONU in a PON, and may implement a CAC function after adding a 10G xPON service. However, the present invention may also be extended to a case of a plurality of bandwidth channels according to an actual situation without being limited to a case of merely two bandwidth channels of 1G/10G.

In this embodiment, the multicast on-demand request may include the identifier of the ONU and the information of the program on-demand, for example, an IP (a multicast IP address). Information managed by the OLT itself may be further obtained during the on-demand request, such as a user identifier (port), a virtual local area network (VLAN, Virtual Local Area Network), and so on. Reference may be made to Internet group management protocol (IGMP, Internet Group Management Protocol) related technologies, and details are not repeatedly described here.

In this embodiment, the optical line terminal may further perform user right management, and only a user which is of the optical network unit and has a right is allowed to access. If the user does not have the right, even if the program has been demanded by another user, the user is not allowed to be online. However, the present invention is not limited to this, and specific user right management may be determined according to a specific situation.

In the prior art, a current CAC solution is to take a physical PON port as a unit, and therefore, two or more than two kinds of channel bandwidths cannot be managed correctly and simultaneously. For example, if a 10G bandwidth is taken as an available bandwidth of the PON port for management, for a 1G bandwidth channel, a bandwidth range is exceeded; and if a 1G bandwidth is taken as the available bandwidth of the PON port for management, a resource of the 10G bandwidth channel cannot be used.

Moreover, a current RACS can only manage the physical PON port. For example, a 1G xPON port is managed, but resource management cannot be performed on different bandwidth channels of 10G and 1G. When an ANCP extends unicast and multicast bandwidth negotiation, an identifier of an access node takes the PON port as granularity, and cannot identify a different bandwidth channel of 10G or 1G.

While in the present invention, it may be known from the foregoing steps that, connection admission control of different bandwidth channels under a same physical port may be performed by dividing the virtual port, or the physical port and the sub-channel, which neither exceeds the bandwidth range, nor wastes resources.

The following describes a manner of adopting the virtual port in detail through an example on the basis of FIG. 1.

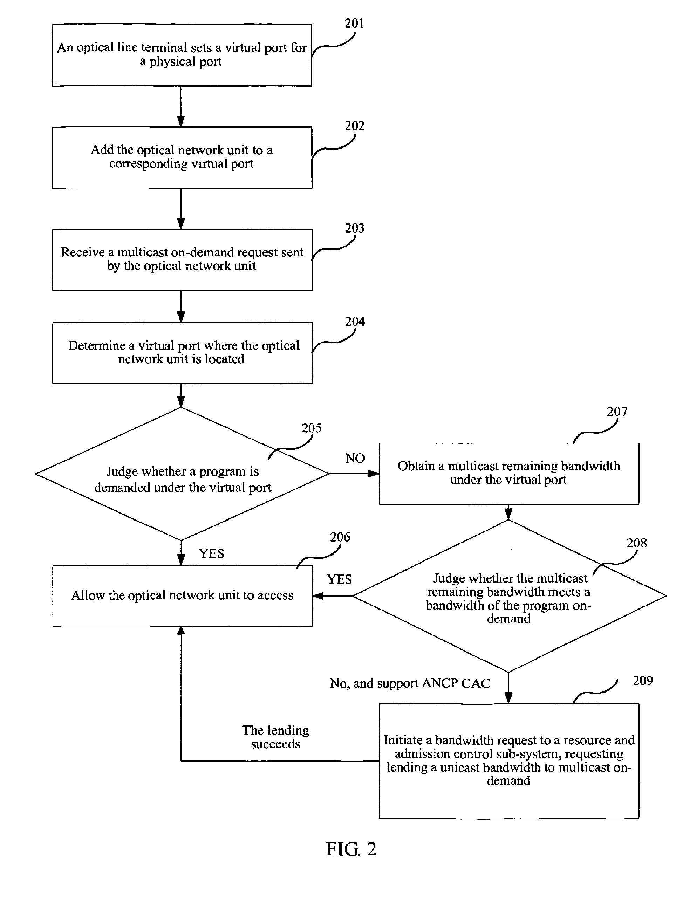

FIG. 2 is a flow chart of a connection admission control method adopting a virtual port according to an embodiment of the present invention, and as shown in FIG. 2, the connection admission control method includes:
Step 201: Set a virtual port for a physical port.

In this embodiment, two bandwidth channels under one PON physical port may be managed as two ports through a port mapping manner. On a service board panel, a corresponding virtual port is added to the physical port.

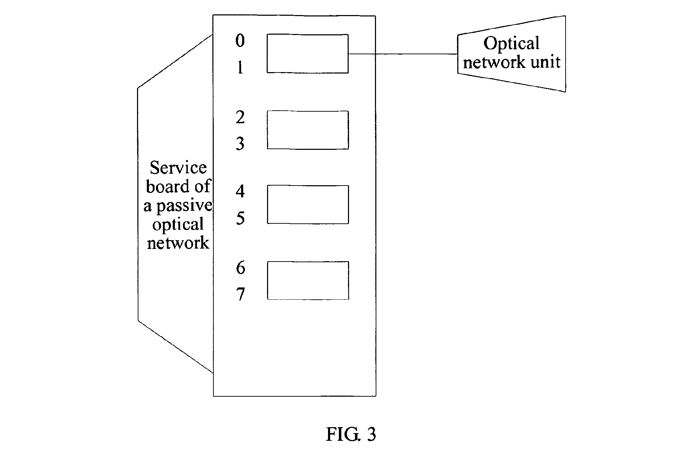

For example, as shown in FIG. 3, one physical port may correspond to two virtual ports. Therefore, a user may see two virtual ports, where one is a virtual port of 1G rate while the other one is a virtual port of 10G rate.

The port mapping manner may be of two kinds. One kind is that, [0,N] is a serial number of a 1G bandwidth channel port, and [N+1, 2N+1] is a serial number of a 10G bandwidth channel port, where N is a natural number. For example, in one PON system, an OLT has 4 physical ports, 0, 1, 2, and 3 may be set as a serial number of a 1G virtual port, and 4, 5, 6, and 7 may be set as a serial number of a 10G virtual port.

The other kind is that, a serial number (N-1)*2 is a serial number of a 1G bandwidth channel port, and 2N-1 is a serial number of a 10G bandwidth channel port. For example, in one PON system, an OLT has 4 physical ports, 0, 2, 4, and 6 may be set as a serial number of a 1G virtual port, and 1, 3, 5, and 7 may be set as a serial number of a 10G virtual port.

The foregoing is merely schematic description of setting the virtual port, but the present invention is not limited to this, and a specific setting manner may be determined according to an actual situation.

Step 202: Add an optical network unit to the corresponding virtual port according to a capability set of the optical network unit at the beginning of adding the optical network unit, so as to establish correspondence between an optical network unit and a virtual port.

In this embodiment, through the setting in step 201, when the ONU is managed on the OLT, the ONU corresponds to a serial number of the virtual port rather than a serial number of the physical port. Therefore, when the ONU is added, the ONU may be added to different virtual ports according to the capability set of the ONU.

For example, a 1G ONU is added to the 1G virtual port, and a 10G ONU is added to the 10G virtual port. Specifically, if a first port mapping manner in the foregoing step 201 is adopted, a physical port 0 corresponds to a virtual port 0 and a virtual port 4. When the ONU is added, the following operations may be performed: adding a first 1G ONU to the virtual port 0, and adding a first 10G ONU to the virtual port 4; and adding a second 1G ONU to a virtual port 1 and adding a second 10G ONU to a virtual port 5. The rest may be deduced by analogy.

If a second port mapping manner in the foregoing step 201 is adopted, a physical port 0 corresponds to a virtual port 0 and a virtual port 1. When the ONU is added, the following operations may be performed: adding a first 1G ONU to the virtual port 0, and adding a first 10G ONU to the virtual port 1; and adding a second 1G ONU to a virtual port 2 and adding a second 10G ONU to a virtual port 3. The rest may be deduced by analogy.

The foregoing is merely schematic description of adding the ONU to the corresponding virtual port, but the present invention is not limited to this, and a specific adding manner may be determined according to an actual situation.

In this embodiment, an RACS may manage a bandwidth based on the virtual port rather than the physical port, only serial numbers of different virtual ports are seen, and bandwidth negotiation is performed on different virtual ports. When CAC is executed on the OLT, a 1G available bandwidth is set for the 1G virtual port, while a 10G available bandwidth is set for the 10G virtual port. Therefore, a management manner does not need to change, and the connection admission control may still be performed on granularity of a port, which is described in detail through the following steps.

Step 203: An optical line terminal receives a multicast on-demand request sent by an optical network unit, where the multicast on-demand request includes an identifier of the optical network unit and information of a program on-demand.

Step 204: The optical line terminal determines, according to the identifier of the optical network unit, a virtual port where the optical network unit is located.

In this embodiment, correspondence which is between an ONU and a virtual port and stored in the OLT is searched according to the identifier which is of the ONU and in the multicast on-demand request to obtain information of the virtual port.

Step 205: The optical line terminal judges whether the program is demanded under the virtual port; and if a judging result is yes, executes step 206.

In this embodiment, specifically, it may be judged whether the program is demanded by another ONU under the virtual port.

Step 206: Allow the optical network unit to access.

Further, if the judging result in step 205 is no, namely, the program is not demanded under the virtual port, the method may further include:
Step 207: Obtain a multicast remaining bandwidth under the virtual port.

In this embodiment, the multicast remaining bandwidth may be obtained through information managed by the OLT. The OLT may manage a bandwidth of a port, and record a multicast total bandwidth and a remaining bandwidth of each port. For example, when no program is demanded, a remaining bandwidth is the same as a total bandwidth, and after a program is demanded, the remaining bandwidth becomes the total bandwidth minus a bandwidth of the program.

Step 208: Judge whether the multicast remaining bandwidth meets a bandwidth of the program on-demand; and if a judging result is that the multicast remaining bandwidth meets the bandwidth of the program on-demand, execute step 206 to allow the optical network unit to access, and recalculate the multicast remaining bandwidth.

In this embodiment, the calculating the multicast remaining bandwidth may be executed by the OLT, and bandwidth information is managed on the OLT.

Further it may be further judged whether a system supports local CAC or ANCP CAC. If the system supports the ANCP CAC, and the judging result in step 208 is that the multicast remaining bandwidth does not meet the bandwidth of the program on-demand, the method may further include:
Step 209: Initiate a bandwidth request to a resource and admission control sub-system, to request lending a unicast bandwidth to multicast on-demand; and when the lending succeeds, execute step 206 to allow the optical network unit to access, and recalculate the multicast remaining bandwidth. In this embodiment, the bandwidth request may include the information of the virtual port where the optical network unit is located.

In this embodiment, the RACS may manage all bandwidths, including the unicast bandwidth and a multicast bandwidth. The RACS may recalculate the unicast remaining bandwidth, and deliver a value of the multicast bandwidth to the OLT, and therefore, the OLT itself may manage the multicast bandwidth.

It may be known from the foregoing steps that, by dividing the virtual port, connection admission control of different bandwidth channels under a same physical port may be performed. In this manner, on the basis of an original CAC management manner, one physical port may be divided into a plurality of virtual ports for management, an original manner for interacting with the RACS is maintained, and there is no need to perform network management upgrading.

Besides, new CAC management granularity may be further added to manage a bandwidth channel according to a number of a sub-channel of a physical port. The following describes a manner of adopting the sub-channel in detail through an example on the basis of FIG. 1.

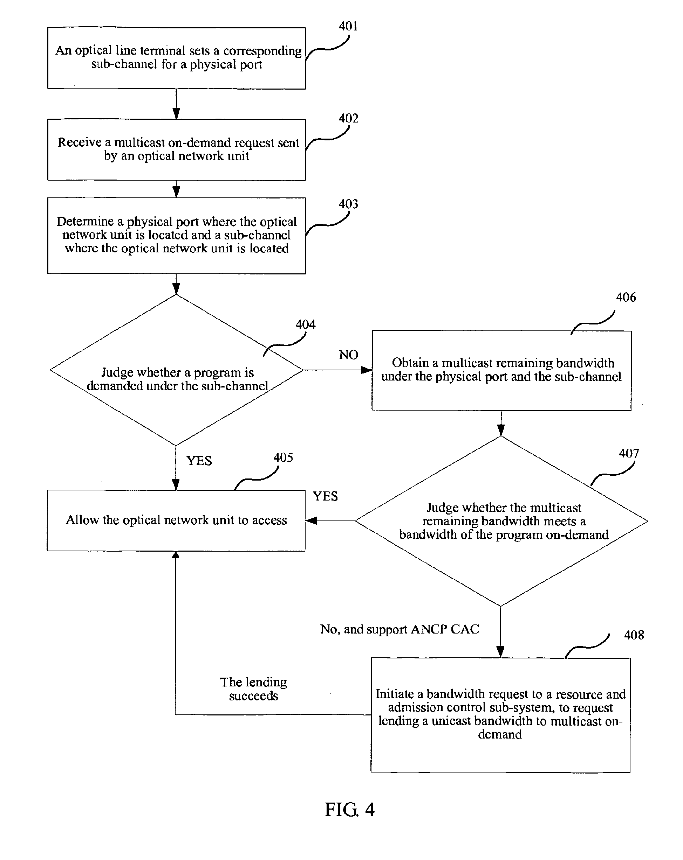

FIG. 4 is a flow chart of a connection admission control method adopting a sub-channel according to an embodiment of the present invention, and as shown in FIG. 4, the connection admission control method includes:
Step 401: Set a corresponding sub-channel for a physical port.

In this embodiment, the sub-channel may be added under the physical port. For example, two sub-channels may be set under one physical port, to correspond to two bandwidth channels of a 1G rate and a 10G rate, and a channel available bandwidth may be set separately.

Specifically, two sub-channels Chn0 and Chn1 may be set under a physical port 0, the Chn0 corresponds to a 1G bandwidth channel, and the Chn1 corresponds to a 10G bandwidth channel; and an initializing remaining bandwidth of the Chn0 is 1G, and an initializing remaining bandwidth of the Chn1 is 10G.

The foregoing is merely schematic description of setting the sub-channel, but the present invention is not limited to this, and a specific setting manner may be determined according to an actual situation.

In this embodiment, an ONU corresponds to a serial number of the physical port when the ONU is managed on an OLT, and the ONU is added under the physical port; and during CAC management, management granularity of the bandwidth channel may be added, and CAC bandwidth control is based on a number of the sub-channel. Therefore, connection admission control may be performed on granularity of the bandwidth channel, and new CAC management granularity is added. The following gives detailed description through the following steps.

Step 402: An optical line terminal receives a multicast on-demand request sent by an optical network unit, where the multicast on-demand request includes an identifier of the optical network unit and information of a program on-demand.

Step 403: The optical line terminal determines, according to the identifier of the optical network unit, a physical port where the optical network unit is located and a sub-channel where the optical network unit is located.

In this embodiment, specifically, the physical port where the ONU is located may be determined according to the identifier of the ONU; and correspondence between an identifier of an ONU and a physical port may be determined at the beginning of adding the ONU, which may be the prior art and is not be repeatedly described here. Besides, a capability set of the ONU (for example, the ONU is of 1G or 10G) may be judged according to the identifier of the ONU, thereby obtaining the sub-channel of the physical port where the ONU is located.

For example, if the ONU is a 1G ONU, first, it may be determined, according to the identifier of the ONU, that the physical port where the ONU is located is a physical port 0, and further, it may be determined, according to that the ONU is the 1G ONU, that the ONU is on the Chn0 under the physical port, so as to obtain the physical port 0 where the ONU is located and the sub-channel Chn0.

Besides, a manner similar to that of the foregoing virtual port may also be adopted. After the sub-channel is set in step 401, the OLT may establish correspondence among an identifier of an ONU, a physical port and a sub-channel at the beginning of adding the ONU. Therefore, after receiving the multicast on-demand request of the ONU, the OLT may determine the physical port where the ONU is located and the sub-channel where the ONU is located directly according to the stored correspondence.

The foregoing is merely schematic description of obtaining the physical port and the sub-channel, but the present invention is not limited to this, and a specific implementation manner may be determined according to an actual situation.

Step 404: The optical line terminal judges whether the program is demanded under the sub-channel of the physical port; and if a judging result is yes, execute step 405.

In this embodiment, specifically, it may be judged whether the program is demanded by another ONU under the sub-channel of the physical port.

Step 405: Allow the optical network unit to access.

Further, if the judging result in step 404 is no, namely, the program is not demanded under the sub-channel of the physical port, the method may further include:
Step 406: Obtain a multicast remaining bandwidth under the sub-channel of the physical port.
Step 407: Judge whether the multicast remaining bandwidth meets a bandwidth of the program on-demand; and if a judging result is that the multicast remaining bandwidth meets the bandwidth of the program on-demand, execute step 405 to allow the optical network unit to access, and recalculate the multicast remaining bandwidth.

For example, two sub-channels Chn0 and Chn1 are under the physical port 0, the Chn0 corresponds to the 1G bandwidth channel, and the Chn1 corresponds to the 10G bandwidth channel. If a program 1 is demanded by an ONUO of a 1G rate, first it is judged whether the program 1 is demanded by another ONU under the Chn0; if yes, the ONUO is allowed to access, the on-demand succeeds; if no, then it is judged whether a remaining bandwidth of the Chn0 meets a bandwidth needed by the program 1, if the remaining bandwidth of the Chn0 meets the bandwidth needed by the program 1, the ONUO is allowed to access, the on-demand succeeds. In this case, deduct the bandwidth of the program 1 from the remaining bandwidth of the Chn0.

If the program 1 is demanded by an ONU2 of a 10G rate, first it is judged whether the program 1 is demanded by another ONU under the Chn1; if yes, the ONU2 is allowed to access, the on-demand succeeds; if no, then it is judged whether a remaining bandwidth of the Chn1 meets the bandwidth needed by the program 1, if the remaining bandwidth of the Chn1 meets the bandwidth needed by the program 1, the ONU2 is allowed to access, the on-demand succeeds. In this case, deduct the bandwidth of the program 1 from the remaining bandwidth of the Chn1.

Therefore, it may be known that the ONU of 1 G only occupies the bandwidth of the Chn0, and the ONU of 10G only occupies the bandwidth of the Chn1.

Further it may be further judged whether a system supports local CAC or ANCP CAC. If the system supports the ANCP CAC, and the judging result in step 407 is that the multicast remaining bandwidth does not meet the bandwidth of the program on-demand, the method may further include:
Step 408: Initiate a bandwidth request to a resource and admission control sub-system, to request lending a unicast bandwidth to multicast on-demand; and when the lending succeeds, execute step 405 to allow the optical network unit to access, and recalculate the multicast remaining bandwidth. In this embodiment, the bandwidth request may include information of the physical port where the optical network unit is located and the sub-channel where the optical network unit is located.

In this embodiment, when managing a bandwidth, the RACS manages not only a bandwidth of the serial number of the physical port but also a bandwidth of a serial number of the sub-channel under the physical port. An initial value of the remaining bandwidth may be transferred according to the serial number of the sub-channel.

For the ANCP CAC, when the remaining bandwidth does not meet the on-demand, the OLT initiates a bandwidth request to the RACS, to let the RACS decide whether to lend the unicast bandwidth to the multicast on-demand; if the lending fails, the on-demand made by the ONU fails; otherwise, the on-demand succeeds, and the remaining bandwidth is refreshed. Therefore, the bandwidth is managed based on the sub-channel.

In this embodiment, when the RACS manages a port bandwidth, the management can be performed on the granularity of the bandwidth channel, so a network control protocol between the RACS and the OLT needs to be extended. An access port identifier may be extended in a network control protocol interaction message to distinguish the bandwidth channel. The following extension is performed:
from an original definition:
   Access-Node-Identifier eth slot/port [:inner-vlan-id][:outer-vlan-id] extended to a new definition:
   Access-Node-Identifier eth slot/port/Chn [:inner-vlan-id][:outer-vlan-id]

It may be known from the foregoing definition that, in the original definition, the access port identifier is only "slot/port", where only management of port granularity can be performed; while in the new definition, the extended access port identifier is "slot/port/Chn", where the information of the sub-channel is added, and therefore, management of bandwidth channel granularity may be performed.

Besides, a type value (TLV) may also be extended to identify the bandwidth channel. Therefore, the 1G/10G bandwidth channel is managed through the newly added extended TLV type.

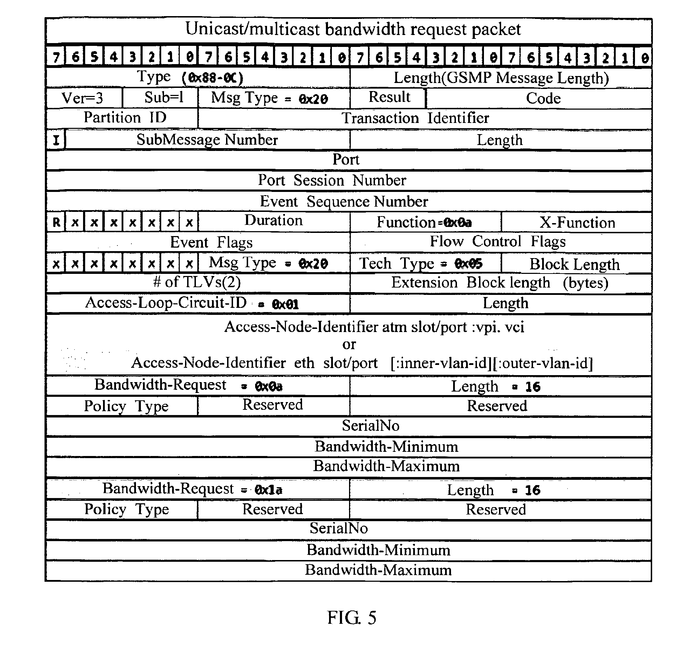

As shown in FIG. 5, in the original definition, the bandwidth request Type = 0x0a; and in the new definition, a 1G bandwidth request Type = 0x0a, and a 10G bandwidth request Type = 0x1a.

It may be known from the foregoing steps, that connection admission control of different bandwidth channels under a same physical port may be performed via the physical port and the sub-channel. Therefore, by extending the management granularity, different bandwidth channels may be managed without changing a structure or configuration of a current network, thereby facilitating management on the current network and reducing complexity of management.

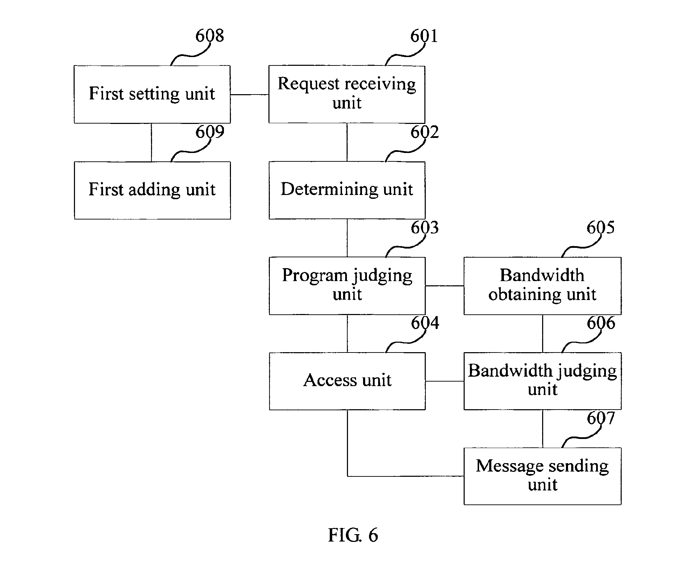

An embodiment of the present invention further provides a connection admission control apparatus, and as shown in FIG. 6, the apparatus includes a request receiving unit 601, a determining unit 602, a program judging unit 603 and an access unit 604, where
the request receiving unit 601 receives a multicast on-demand request sent by an optical network unit, where the multicast on-demand request includes an identifier of the optical network unit and information of a program on-demand;
the determining unit 602 determines, according to the identifier of the optical network unit, a virtual port where the optical network unit is located, or a physical port where the optical network unit is located and a sub-channel where the optical network unit is located;
the program judging unit 603 judges whether the program is demanded under the virtual port where the optical network unit is located or under the sub-channel of the physical port where the optical network unit is located; and
the access unit 604 allows the optical network unit to access when a judging result of the program judging unit 603 is yes.

It may be known from the foregoing apparatus that, connection admission control of different bandwidth channels under a same physical port may be performed by dividing the virtual port, or the physical port and the sub-channel.

Further, as shown in FIG. 6, the apparatus may further include: a bandwidth obtaining unit 605 and a bandwidth judging unit 606, where
the bandwidth obtaining unit 605 obtains a multicast remaining bandwidth under the virtual port where the optical network unit is located, or under the sub-channel of the physical port where the optical network unit is located when the judging result of the program judging unit 603 is no;
the bandwidth judging unit 606 judges whether the multicast remaining bandwidth meets a bandwidth of the program on-demand; and
the access unit 604 allows the optical network unit to access, and recalculates the multicast remaining bandwidth, if a judging result of the bandwidth judging unit 606 is that the multicast remaining bandwidth meets the bandwidth of the program on-demand.

Further, the apparatus may further include a message sending unit 607, where
the message sending unit 607 initiates a bandwidth request to a resource and admission control sub-system to request lending a unicast bandwidth to multicast on-demand when the judging result of the bandwidth judging unit 606 is that the multicast remaining bandwidth does not meet the bandwidth of the program on-demand and access node control protocol connection admission control is supported;
and the access unit 604 allows the optical network unit to access, and recalculates the multicast remaining bandwidth when the lending succeeds.

Further, the apparatus may further include a first setting unit 608 and a first adding unit 609, where the first setting unit sets a virtual port for a physical port having different bandwidth channels; and
the first adding unit 609 adds an optical network unit to a corresponding virtual port according to a capability set of the optical network unit when adding the optical network unit, to establish correspondence between an identifier of an optical network unit and a virtual port.

Moreover, the determining unit 602 may be specifically configured to determine the virtual port where the optical network unit is located according to the correspondence between the identifier of the optical network unit and the virtual port.

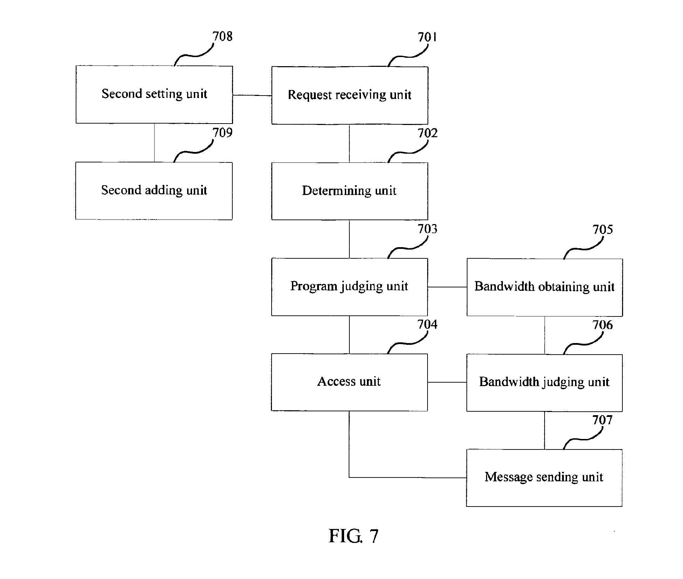

In another embodiment of the present invention, as shown in FIG. 7, the connection admission control apparatus includes: a request receiving unit 701, a determining unit 702, a program judging unit 703, and an access unit 704.

Furthermore, as shown in FIG. 7, the apparatus may further include: a bandwidth obtaining unit 705, and a bandwidth judging unit 706; further, the apparatus may further include: a message sending unit 707. As described above, the units are not repeatedly described here.

Further, the apparatus may further include a second setting unit 708 and a second adding unit 709, where
the second setting unit 708 sets a corresponding sub-channel for a physical port having different bandwidth channels; and
the second adding unit 709 adds an optical network unit to a corresponding physical port according to the identifier of the optical network unit at the beginning of adding the optical network unit, to establish correspondence between an identifier of an optical network unit and a physical port, or correspondence among an identifier of an optical network unit, a physical port and a sub-channel.

Moreover, the determining unit 702 may be specifically configured to: determine the physical port where the optical network unit is located according to the correspondence between the identifier of the optical network unit and the physical port, and determine the corresponding sub-channel according to a capability set of the optical network unit;
or, determine the physical port where the optical network unit is located and the sub-channel where the optical network unit is located according to the correspondence among the identifier of the optical network unit, the physical port and the sub-channel.

Further, the message sending unit 707 is further configure to: send a network control protocol interaction message to a resource and admission control sub-system, requesting transferring an initial value of a remaining bandwidth of the corresponding virtual port or the sub-channel under the corresponding physical port, where the network control protocol interaction message carries an extended access port identifier or an extended type value to identify the virtual port or the sub-channel under the physical port.

An embodiment of the present invention further provides a passive optical network system, where the passive optical network system includes an optical line terminal and an optical network unit, and the optical line terminal includes the foregoing connection admission control apparatus.

Each component of the apparatus in this embodiment is configured to implement each step of the method in the foregoing embodiments separately, and in the method embodiments, each step is described in detail, and is not repeatedly described here.

It may be known from the foregoing embodiments that, the connection admission control of different bandwidth channels under the same physical port may be performed by dividing the virtual port, or the physical port and the sub-channel. Different bandwidth channels may be identified correctly without exceeding a bandwidth range and wasting resources.

Persons of ordinary skill in the art should be further aware that, units and algorithm steps of the examples described with reference to the embodiments disclosed in the present invention can be implemented by electronic hardware, such as a computer processor or a CPU, computer software, or a combination of the two. To clearly describe interchangeability between the hardware and the software, the foregoing has generally described compositions and steps of the examples according to functions. Whether the functions are executed by hardware or software depends on specific applications and design constraint conditions of the technical solutions. Persons skilled in the art may use different methods to implement the described functions for every specific application, but it should not be considered that the implementation goes beyond the scope of the present invention. The steps of the methods or algorithms described with reference to the embodiments disclosed in the present invention may be implemented by using hardware, a software module executed by a processor, or a combination of the two. The software module may be disposed in a random access memory (RAM), a memory, a read only memory (ROM), an electrically programmable ROM, an electrically erasable programmable ROM, a register, a hard disk, a removable disk, a CD-ROM, or any other storage medium well-known in the technical field.

The foregoing specific implementation manners further describe the objectives, technical solutions, and benefits of the present invention in detail. It should be understood that, the foregoing is merely the specific implementation manners of the present invention, and is not intended to limit the protection scope of the present invention.

## Claims

1. A connection admission control method, comprising:
receiving (101, 402), by an optical line terminal, OLT, a multicast on-demand request sent by an optical network unit, ONU, wherein the multicast on-demand request comprises an identifier of the optical network unit and information of a program on-demand;
determining a physical port and a sub-channel of a physical port where the ONU is located, according to the identifier of the optical network unit and a correspondence among the identifier of the ONU, a physical port of the OLT, and a sub-channel of a physical port;
wherein a physical port of the OLT at least comprises 1 G and 10G sub-channels; wherein 1G bandwidth is assigned to the 1G sub-channel while 10G bandwidth is assigned to the 10G sub-channel, the correspondence among the identifier of the ONU, a physical port and a sub-channel is established by adding the ONU to the corresponding physical port according to the identifier of the ONU at the beginning of adding the ONU to the OLT; and
determining (103, 404) whether the program is demanded under the determined sub-channel of the determined physical port; and if a determination result is yes, allowing (405) the optical network unit to access.

2. The method according to claim 1, further comprising: if the program is not demanded under the determined sub-channel of the determined physical port,
obtaining (406) a multicast remaining bandwidth under the sub-channel of the physical port where the optical network unit is located;
judging (407) whether the multicast remaining bandwidth meets a bandwidth of the program on-demand; and
if a judging result is that the multicast remaining bandwidth meets the bandwidth of the program on-demand, allowing (405) the optical network unit to access, and recalculating the multicast remaining bandwidth under the sub-channel of the physical port where the optical network unit is located.

3. The method according to claim 2, wherein when the determination result is that the multicast remaining bandwidth does not meet the bandwidth of the program on-demand and access node control protocol connection admission control is supported, the method further comprises:
initiating (408) a bandwidth request to a resource and admission control sub-system to request lending a unicast bandwidth to multicast on-demand, wherein the bandwidth request comprises the physical port where the optical network unit is located and the sub-channel where the optical network unit is located; and
allowing (405) the optical network unit to access, and recalculating the multicast remaining bandwidth when the lending succeeds.

4. The method according to claim 1, wherein before the determining a physical port and a sub-channel of a physical port where the ONU is located, according to the identifier of the optical network unit and a correspondence among an identifier of an ONU, a physical port of the OLT and a sub-channel of a physical port, the method further comprises:
adding the optical network unit to a corresponding physical port according to the identifier of the optical network unit at the beginning of adding the optical network unit, to establish correspondence among an identifier of an optical network unit, a physical port and a sub-channel.

5. The method according to any one of claims 1 to 4, further comprising:
sending a network control protocol interaction message to the resource and admission control sub-system, wherein the network control protocol interaction message carries an extended access port identifier or an extended type value to identify the sub-channel under the physical port, so as to obtain an initial value of a remaining bandwidth value of the corresponding sub-channel under the corresponding physical port from the resource and admission control sub-system.

6. A connection admission control apparatus, comprising:
a request receiving unit (701), configured to receive a multicast on-demand request sent by an optical network unit, wherein the multicast on-demand request comprises an identifier of the optical network unit and information of a program on-demand;
a determining unit (702), configured to determine, a physical port and a sub-channel where the optical network unit is located, according to the identifier of the optical network unit and a correspondence among the identifier of the ONU, a physical port of the OLT and a sub-channel of a physical port;
wherein a physical port of the OLT at least comprises 1G and 10G sub-channels; wherein 1G bandwidth is assigned to the 1G sub-channel while 10G bandwidth is assigned to the 10G sub-channel, the correspondence among the identifier of the ONU, a physical port and a sub-channel of a physical port is established by adding the ONU to the corresponding physical port according to the identifier of the ONU at the beginning of adding the ONU to the OLT;
a program judging unit (703), configured to determine whether the program is demanded under the determined sub-channel of the determined physical port; and
an access unit (704), configured to allow the optical network unit to access when a determination result of the program judging unit is yes.

7. The apparatus according to claim 6, further comprising:
a bandwidth obtaining unit (705), configured to obtain a multicast remaining bandwidth under the sub-channel of the physical port where the optical network unit is located, if the program is not demanded under the determined sub-channel of the determined physical port; and
a bandwidth judging unit (706), configured to determine whether the multicast remaining bandwidth meets a bandwidth of the program on-demand,
wherein the access unit is further configured to allow the optical network unit to access, and recalculates the multicast remaining bandwidth, if a determination result of the bandwidth judging unit is that the multicast remaining bandwidth meets the bandwidth of the program on-demand.

8. The apparatus according to claim 7, further comprising:
a message sending unit (707), configured to initiate a bandwidth request to a resource and admission control sub-system, to request lending a unicast bandwidth to multicast on-demand when the judging result of the bandwidth judging unit is that the multicast remaining bandwidth does not meet the bandwidth of the program on-demand and access node control protocol connection admission control is supported,
wherein the access unit is further configured to allow the optical network unit to access, and recalculate the multicast remaining bandwidth when the lending succeeds.

9. The apparatus according to claim 6, further comprising:
a second setting unit (708), configured to set a corresponding sub-channel for a physical port having different bandwidth channels; and
a second adding unit (709), configured to add the optical network unit to a corresponding physical port according to the identifier of the optical network unit at the beginning of adding the optical network unit, to establish correspondence among an identifier of an optical network unit, a physical port and a sub-channel.

10. The apparatus according to claim 8, wherein the message sending unit (707) is further configured to send a network control protocol interaction message to the resource and admission control sub-system, to request transferring an initial value of a remaining bandwidth of the corresponding sub-channel under the corresponding physical port,
wherein the network control protocol interaction message carries an extended access port identifier or an extended type value to identify the sub-channel under the physical port.

11. A passive optical network system, comprising an optical line terminal and an optical network unit, wherein the optical line terminal comprises the connection admission control apparatus according to any one of claims 6 to 10.

## Patentansprüche

1. Verbindungsannahme-Steuerverfahren, das die folgenden Schritte aufweist:
Empfangen (101, 402) durch einen optischen Leitungsabschluss (optical line terminal, OLT) einer Multicast-Abrufanfrage, die durch eine optische Netzwerkeinheit (optical network unit, ONU) gesendet wird, wobei die Multicast-Abrufanfrage eine Kennung der optischen Netzwerkeinheit und Informationen eines Programmabrufs aufweist;
Feststellen eines physikalischen Ports und eines Unterkanals eines physikalischen Ports, wo sich die ONU befindet, entsprechend der Kennung der optischen Netzwerkeinheit und einer Entsprechung zwischen der Kennung der ONU, einem physikalischen Port des OLT und einem Unterkanal eines physikalischen Ports;
wobei ein physikalischer Port des OLT mindestens 1G- und 10G-Unterkanäle aufweist; wobei dem 1G-Unterkanal eine 1G-Bandbreite zugeordnet ist, während dem lOG-Unterkanal eine 10G-Bandbreite zugeordnet ist, wobei die Entsprechung zwischen der Kennung der ONU, einem physikalischen Port und einem Unterkanal durch Hinzufügen der ONU zum entsprechenden physikalischen Port entsprechend der Kennung der ONU zum Beginn des Hinzufügens der ONU zum OLT hergestellt wird; und
Feststellen (103, 404), ob das Programm unter dem festgestellten Unterkanal des festgestellten physikalischen Ports abgerufen wird; und falls ein Feststellungsergebnis ja lautet, Zulassen (405) des Zugriffs der optischen Netzwerkeinheit.

2. Verfahren nach Anspruch 1, das ferner aufweist: falls das Programm nicht unter dem festgestellten Unterkanal des festgestellten physikalischen Ports abgerufen wird, Beschaffen (406) einer verbleibenden Multicast-Bandbreite unter dem Unterkanal des physikalischen Ports, wo sich die optische Netzwerkeinheit befindet;
Beurteilen (407), ob die verbleibende Multicast-Bandbreite einer Bandbreite des Programmabrufs entspricht; und
wenn ein Beurteilungsergebnis ist, dass die verbleibende Multicast-Bandbreite der Bandbreite des Programmabrufs entspricht, Zulassen (405) des Zugriffs der optischen Netzwerkeinheit, und Neuberechnen der verbleibenden Multicast-Bandbreite unter dem Unterkanal des physikalischen Ports, wo sich die optische Netzwerkeinheit befindet.

3. Verfahren nach Anspruch 2, wobei, wenn das Feststellungsergebnis ist, dass die verbleibende Multicast-Bandbreite nicht der Bandbreite des Programmabrufs entspricht und eine "Access Node Control Protocol"-Verbindungsannahmesteuerung unterstützt wird, das Verfahren ferner aufweist:
Auslösen (408) einer Bandbreitenanforderung an ein "Resource and Admission Control"-Teilsystem, um das Ausleihen einer Unicast-Bandbreite an einen Multicast-Abruf anzufordern, wobei die Bandbreitenanforderung den physikalischen Port, wo sich die optische Netzwerkeinheit befindet, und den Unterkanal umfasst, wo sich die optische Netzwerkeinheit befindet; und
Zulassen (405) des Zugriffs der optischen Netzwerkeinheit, und Neuberechnen der verbleibenden Multicast-Bandbreite, wenn das Ausleihen erfolgreich ist.

4. Verfahren nach Anspruch 1, wobei vor dem Feststellen eines physikalischen Ports und eines Unterkanals eines physikalischen Ports, wo sich die ONU befindet, entsprechend der Kennung der optischen Netzwerkeinheit und einer Entsprechung zwischen einer Kennung einer ONU, einem physikalischen Port des OLT und einem Unterkanal eines physikalischen Ports, das Verfahren ferner aufweist:
Hinzufügen der optischen Netzwerkeinheit zu einem entsprechenden physikalischen Port entsprechend der Kennung der optischen Netzwerkeinheit zum Beginn des Hinzufügens der optischen Netzwerkeinheit, um eine Entsprechung zwischen einer Kennung einer optischen Netzwerkeinheit, einem physikalischen Port und einem Unterkanal herzustellen.

5. Verfahren nach einem der Ansprüche 1 bis 4, das ferner aufweist:
Senden einer "Network Control Protocol"-Interaktionsnachricht an das "Resource and Admission Control"-Teilsystem, wobei die "Network Control Protocol"-Interaktionsnachricht eine erweiterte Zugangsportkennung oder einen erweiterten Typwert befördert, um den Unterkanal unter dem physikalischen Port zu identifizieren, um einen Anfangswert eines Werts der verbleibenden Bandbreite des entsprechenden Unterkanals unter dem entsprechenden physikalischen Port vom "Resource and Admission Control"-Teilsystem zu erhalten.

6. Verbindungsannahmesteuerungsvorrichtung, die Folgendes aufweist:
eine Anfrageempfangseinheit (701), die konfiguriert ist, eine Multicast-Abrufanfrage zu empfangen, die durch eine optische Netzwerkeinheit gesendet wird, wobei die Multicast-Abrufanfrage eine Kennung der optischen Netzwerkeinheit und Informationen eines Programmabrufs aufweist;
eine Feststellungseinheit (702), die konfiguriert ist, einen physikalischen Port und einen Unterkanal, wo sich die optische Netzwerkeinheit befindet, entsprechend der Kennung der optischen Netzwerkeinheit und einer Entsprechung zwischen der Kennung der ONU, einem physikalischen Port des OLT und einem Unterkanal eines physikalischen Ports festzustellen;
wobei ein physikalischer Port des OLT mindestens 1G- und 10G-Unterkanäle aufweist; wobei dem 1G-Unterkanal eine 1G-Bandbreite zugeordnet ist, während dem 10G-Unterkanal eine 10G-Bandbreite zugeordnet ist, wobei die Entsprechung zwischen der Kennung der ONU, einem physikalischen Port und einem Unterkanal eines physikalischen Ports durch Hinzufügen der ONU zum entsprechenden physikalischen Port entsprechend der Kennung der ONU zum Beginn des Hinzufügens der ONU zum OLT hergestellt wird;
eine Programmbeurteilungseinheit (703), die konfiguriert ist, festzustellen, ob das Programm unter dem festgestellten Unterkanal des festgestellten physikalischen Ports abgerufen wird; und
eine Zugriffseinheit (704), die konfiguriert ist, einen Zugriff der optischen Netzwerkeinheit zuzulassen, wenn ein Feststellungsergebnis der Programmbeurteilungseinheit ja lautet.

7. Vorrichtung nach Anspruch 6, die ferner aufweist:
eine Bandbreitenbeschaffungseinheit (705), die konfiguriert ist, eine verbleibende Multicast-Bandbreite unter dem Unterkanal des physikalischen Ports zu beschaffen, wo sich die optische Netzwerkeinheit befindet, falls das Programm nicht unter dem festgestellten Unterkanal des festgestellten physikalischen Ports abgerufen wird; und
eine Bandbreitenbeurteilungseinheit (706), die konfiguriert ist, festzustellen, ob die verbleibende Multicast-Bandbreite einer Bandbreite des Programmabrufs entspricht, wobei die Zugriffseinheit ferner konfiguriert ist, einen Zugriff der optischen Netzwerkeinheit zuzulassen, und die verbleibende Multicast-Bandbreite neu berechnet, falls es ein Feststellungsergebnis der Bandbreitenbeurteilungseinheit ist, dass die verbleibende Multicast-Bandbreite der Bandbreite des Programmabrufs entspricht.

8. Vorrichtung nach Anspruch 7, die ferner aufweist:
eine Nachrichtensendeeinheit (707), die konfiguriert ist, eine Bandbreitenanforderung an ein "Resource and Admission Control"-Teilsystem auszulösen, um das Ausleihen einer Unicast-Bandbreite an einen Multicast-Abruf anzufordern, wenn das Beurteilungsergebnis der Bandbreitenbeurteilungseinheit ist,
dass die verbleibende Multicast-Bandbreite nicht der Bandbreite des Programmabrufs entspricht und eine "Access Node Control Protocol"-Verbindungsannahmesteuerung unterstützt wird,
wobei die Zugriffseinheit ferner konfiguriert ist, einen Zugriff der optischen Netzwerkeinheit zuzulassen und die verbleibende Multicast-Bandbreite neu zu berechnen, wenn das Ausleihen erfolgreich ist.

9. Vorrichtung nach Anspruch 6, die ferner aufweist:
eine zweite Einstelleinheit (708), die konfiguriert ist, einen entsprechenden Unterkanal für einen physikalischen Port einzustellen, der Kanäle mit verschiedener 0Bandbreite aufweist; und
eine zweite Hinzufügungseinheit (709), die konfiguriert ist, die optische Netzwerkeinheit zu einem entsprechenden physikalischen Port entsprechend der Kennung der optischen Netzwerkeinheit zum Beginn des Hinzufügens der optischen Netzwerkeinheit hinzuzufügen, um eine Entsprechung zwischen einer Kennung einer optischen Netzwerkeinheit, einem physikalischen Port und einem Unterkanal herzustellen.

10. Vorrichtung nach Anspruch 8, wobei die Nachrichtensendeeinheit (707) ferner konfiguriert ist, eine "Network Control Protocol"-Interaktionsnachricht an das "Resource and Admission Control"-Teilsystem zu senden, um die Übertragung eines Anfangswerts einer verbleibenden Bandbreite des entsprechenden Unterkanals unter dem entsprechenden physikalischen Port anzufordern,
wobei die "Network Control Protocol"-Interaktionsnachricht eine erweiterte Zugangsportkennung oder einen erweiterten Typwert befördert, um den Unterkanal unter dem physikalischen Port zu identifizieren.

11. Passives optisches Netzwerksystem, das einen optischen Leitungsabschluss und eine optische Netzwerkeinheit aufweist, wobei der optische Leitungsabschluss die Verbindungsannahmesteuerungsvorrichtung nach einem der Ansprüche 6 bis 10 aufweist.

## Revendications

1. Procédé de contrôle d'admission à une connexion, comprenant :
la réception (101, 402), par un terminal de ligne optique, OLT (Optical Line Terminal), d'une demande de multidiffusion à la demande envoyée par une unité de réseau optique, ONU (Optical Network Unit), la demande de multidiffusion à la demande comprenant un identifiant de l'unité de réseau optique et des informations concernant un programme à la demande ;
la détermination d'un port physique et d'un sous-canal d'un port physique où se trouve l'ONU, conformément à l'identifiant de l'unité de réseau optique et à une correspondance entre l'identifiant de l'ONU, un port physique de l'OLT et un sous-canal d'un port physique ;
un port physique de l'OLT comprenant au moins des sous-canaux 1G et 10G ; une largeur de bande de 1G étant affectée au sous-canal 1 G tandis qu'une largeur de bande de 10G est affectée au sous-canal 10G, la correspondance entre l'identifiant de l'ONU, un port physique et un sous-canal étant établie en ajoutant l'ONU au port physique correspondant conformément à l'identifiant de l'ONU au début de l'ajout de l'ONU à l'OLT ; et
le fait de déterminer (103, 404) si le programme est demandé sur le sous-canal déterminé du port physique déterminé ; et si le résultat de la détermination est oui, le fait de permettre (405) à l'unité de réseau optique à effectuer un accès.

2. Procédé selon la revendication 1, comprenant en outre : si le programme n'est pas demandé sur le sous-canal déterminé du port physique déterminé,
l'obtention (406) d'une largeur de bande de multidiffusion restante sur le sous-canal du port physique où se trouve l'unité de réseau optique ;
le fait de juger (407) si la largeur de bande de multidiffusion restante couvre une largeur de bande du programme à la demande ; et
si le résultat du jugement est que la largeur de bande de multidiffusion restante couvre la largeur de bande du programme à la demande, le fait de permettre (405) à l'unité de réseau optique d'effectuer un accès, et le fait de recalculer la largeur de bande de multidiffusion restante sur le sous-canal du port physique où se trouve l'unité de réseau optique.

3. Procédé selon la revendication 2, dans lequel, lorsque le résultat de la détermination est que la largeur de bande de multidiffusion restante ne couvre pas la largeur de bande du programme à la demande et si un contrôle d'admission à une connexion à protocole de contrôle de noeud d'accès est pris en charge, le procédé comprend en outre :
l'envoi (408) d'une demande de largeur de bande à un sous-système de contrôle de ressource et d'admission pour demander le prêt d'une largeur de bande de diffusion individuelle afin d'effectuer une multidiffusion à la demande, la demande de largeur de bande comprenant le port physique où se trouve l'unité de réseau optique et le sous-canal où se trouve l'unité de réseau optique ; et
le fait de permettre (405) à l'unité de réseau optique d'effectuer un accès, et le fait de recalculer la largeur de bande de multidiffusion restante lorsque le prêt aboutit.

4. Procédé selon la revendication 1, dans lequel, avant la détermination d'un port physique et d'un sous-canal d'un port physique où se trouve l'ONU, conformément à l'identifiant de l'unité de réseau optique et à une correspondance entre un identifiant d'une ONU, un port physique de l'OLT et un sous-canal d'un port physique, le procédé comprend en outre :
l'ajout de l'unité de réseau optique à un port physique correspondant conformément à l'identifiant de l'unité de réseau optique au début de l'ajout de l'unité de réseau optique, de façon à établir une correspondance entre un identifiant d'une unité de réseau optique, un port physique et un sous-canal.

5. Procédé selon l'une quelconque des revendications 1 à 4, comprenant en outre :
l'envoi d'un message d'interaction à protocole de contrôle de réseau au sous-système de contrôle de ressource et d'admission, le message d'interaction à protocole de contrôle de réseau acheminant un identifiant de port d'accès étendu ou une valeur de type étendue de façon à identifier le sous-canal sur le port physique, afin d'obtenir une valeur initiale d'une valeur de largeur de bande restante du sous-canal correspondant sur le port physique correspondant auprès du sous-système de contrôle de ressource et d'admission.

6. Appareil de contrôle d'admission à une connexion, comprenant :
une unité de réception de demande (701), configurée de façon à recevoir une demande de multidiffusion à la demande envoyée par une unité de réseau optique, la demande de multidiffusion à la demande comprenant un identifiant de l'unité de réseau optique et des informations concernant un programme à la demande ;
une unité de détermination (702), configurée pour déterminer un port physique et un sous-canal où se trouve l'unité de réseau optique, conformément à l'identifiant de l'unité de réseau optique et à une correspondance entre l'identifiant de l'ONU, un port physique de l'OLT et un sous-canal d'un port physique ;
un port physique de l'OLT comprenant au moins des sous-canaux 1G et 10G ; une largeur de bande de 1G étant affectée au sous-canal 1 G tandis qu'une largeur de bande de 10G est affectée au sous-canal 10G, la correspondance entre l'identifiant de l'ONU, un port physique et un sous-canal d'un port physique étant établie en ajoutant l'ONU au port physique correspondant conformément à l'identifiant de l'ONU au début de l'ajout de l'ONU à l'OLT ;
une unité de jugement de programme (703), configurée de façon à déterminer si le programme est demandé sur le sous-canal déterminé du port physique déterminé ; et
une unité d'accès (704), configurée de façon à permettre à l'unité de réseau optique d'effectuer un accès, lorsqu'un résultat de détermination de l'unité de jugement de programme est oui.

7. Appareil selon la revendication 6, comprenant en outre :
une unité d'obtention de largeur de bande (705), configurée pour obtenir une largeur de bande de multidiffusion restante sur le sous-canal du port physique où se trouve l'unité de réseau optique, si le programme n'est pas demandé sur le sous-canal déterminé du port physique déterminé ; et
une unité de jugement de largeur de bande (706), configurée de façon à déterminer si la largeur de bande de multidiffusion restante couvre une largeur de bande du programme à la demande,
dans lequel l'unité d'accès est en outre configurée de façon à permettre à l'unité de réseau optique d'effectuer un accès, et recalcule la largeur de bande de multidiffusion restante si un résultat de détermination de l'unité de jugement de largeur de bande est que la largeur de bande de multidiffusion restante couvre la largeur de bande du programme à la demande.

8. Appareil selon la revendication 7, comprenant en outre :
une unité d'envoi de message (707), configurée pour envoyer une demande de largeur de bande à un sous-système de contrôle de ressource et d'admission, de façon à demander le prêt d'une largeur de bande de diffusion individuelle pour effectuer une multidiffusion à la demande lorsque le résultat de jugement de l'unité de jugement de largeur de bande est que la largeur de bande de multidiffusion restante ne couvre pas la largeur de bande du programme à la demande et lorsque le contrôle d'admission à une connexion à protocole de contrôle de noeud d'accès est pris en charge,
dans lequel l'unité d'accès est en outre configurée de façon à permettre à l'unité de réseau optique d'effectuer un accès, et à recalculer la largeur de bande de multidiffusion restante lorsque le prêt aboutit.

9. Appareil selon la revendication 6, comprenant en outre :
une seconde unité de réglage (708), configurée de façon à régler un sous-canal correspondant pour un port physique ayant des canaux de différentes largeurs de bande ; et
une seconde unité d'ajout (709), configurée pour ajouter l'unité de réseau optique à un port physique correspondant conformément à l'identifiant de l'unité de réseau optique au début de l'ajout de l'unité de réseau optique, afin d'établir une correspondance entre un identifiant d'une unité de réseau optique, un port physique et un sous-canal.

10. Appareil selon la revendication 8, dans lequel l'unité d'envoi de message (707) est en outre configurée de façon à envoyer un message d'interaction de protocole de contrôle de réseau au sous-système de contrôle de ressource et d'admission, afin de demander le transfert d'une valeur initiale d'une largeur de bande restante du sous-canal correspondant sur le port physique correspondant,
dans lequel le message d'interaction à protocole de contrôle de réseau achemine un identifiant de port d'accès étendu ou une valeur de type étendue de façon à identifier le sous-canal sur le port physique.

11. Système de réseau optique passif, comprenant un terminal de ligne optique et une unité de réseau optique, dans lequel le terminal de ligne optique comprend l'appareil de contrôle d'admission à une connexion selon l'une quelconque des revendications 6 à 10.
